# EUROPÄISCHE PATENTSCHRIFT

(11) **EP 2 450 004 B1**
(45) Veröffentlichungstag und Bekanntmachung des Hinweises auf die Patenterteilung: **23.03.2016**
(21) Anmeldenummer: 10190129.6
(22) Anmeldetag: 05.11.2010
(51) Int. Cl.: A61C 13/20, B22C 1/02

(54) **Pressmuffel**
Muffle
Moufle de presse

(43) Veröffentlichungstag der Anmeldung: 09.05.2012
(73) Patentinhaber: Ivoclar Vivadent AG, 9494 Schaan (LI)
(72) Erfinder: Harald, Buerke, 6820 Frastanz (AT); Jussel, Rudolf, 6805 Feldkirch-Gisingen (AT); Kappert, Heinrich, 9490 Vaduz (LI); Rohner, Gottfried, 9450 Altstätten (CH); Stampfer, Thomas, 6806 Feldkirch-Tosters (AT)
(74) Vertreter: Baronetzky, Klaus

(56) Entgegenhaltungen:
- DE-A1- 3 445 848
- DE-A1- 3 844 151
- DE-C- 687 383
- DE-C1- 4 030 542
- GB-A- 461 104
- JP-A- 11 076 270

## Beschreibung

Die Erfindung betrifft eine Pressmuffel aus Einbettmasse, gemäß dem Oberbegriff von Anspruch 1.

Pressmuffeln für die Dentaltechnik bestehen in der Regel aus keramischen Einbettmassen die cristobalit-haltig sind und die um ein Positivmodell eines dentalen Restaurationsteils gegossen werden. Das oder die Dentalrestaurationsteile sind bevorzugt zentral in der Muffel eingebracht. Die Muffel wird nach Aushärten erwärmt, so dass die Wachsbestandteile vollständig verschwinden und Formräume für die Dentalrestaurationsteile verbleiben, die über einen Presskanal mit Dentalkeramik befüllt werden können.

Aus Kostengründen ist es wünschenswert, gleich mehrere Dentalrestaurationsteile gemeinsam pressen zu können, wozu der Presskanal baumartig verzweigt ist und Einzel-Formräume über Verbindungskanäle mit dem Presskanal in Verbindung stehen.

Bedingt durch die Mehrfachanordnung von Formräumen ist der Abstand zwischen dem Aussenumfang und dem jeweiligen Formraum unterschiedlich. Für die Qualität des Dentalrestaurationsteils ist es jedoch entscheidend, dass ein genaues Temperaturprofil beim Pressen beachtet wird.

Bei der Realisierung von Einbettmassen für Brennöfen - also nicht Pressöfen - ist es aus der DE 38 44 151 bekannt geworden, zur Vermeidung eines Wärmestaus die Einbettmasse mit Chromgranulat oder Wolframgranulat zu versehen. Dies geschieht unmittelbar angrenzend an die dentalen Restaurationsteile, so dass das Chromgranulat an den dortigen Primärteilen anliegt. Dies kann jedoch leicht zur Oxidation und zur Verfärbung der Primärteile führen, was insbesondere dann nicht akzeptabel ist, wenn das Dentalrestaurationsteil im frontalen Bereich verwendet wird.

Zur Vergleichmäßigung eines Temperaturprofils innerhalb der Muffel ist es ferner vorgeschlagen worden, einen Metallring zu verwenden, der sich am Aussenumfang der Muffel erstreckt. Dieser soll zugleich stützend wirken und ein Abplatzen der Muffel beim Pressvorgang verhindern. Andererseits hat Metall typischerweise einen vergleichsweise großen Temperatur-Ausdehnungskoeffizienten, so dass die erwünschte Stützfunktion beim Pressen nicht in erwünschtem Maße gegeben ist.

Zwar lässt sich die Temperaturvergleichmäßigung auch durch eine entsprechende Wartezeit ohne weiteres erreichen. Bei grossen Muffeln mit einer Vielzahl von Formräumen - beispielsweise 10-gliedrigen Brücken - kann eine derartige Zykluszeit aber dann durchaus 8 Stunden, also einen ganzen Arbeitstag, bedeuten, was ebenfalls unerwünscht ist.

Eine Pressmuffel gemäß dem Oberbegriff des Anspruchs 1 ist aus den Dokumenten DE 4030542, JP 11076270, DE 687 383, DE 3445848 und DE 3844151 bekannt.

Demgegenüber liegt der Erfindung zugrunde, eine Pressmuffel aus Einbettmasse für die Herstellung von Dentalrestaurationsteilen gemäß dem Oberbegriff von Anspruch 1 bereitzustellen, die hinsichtlich der Handhabbarkeit in der Praxis und der Zykluszeit deutlich verbessert ist, ohne dass es zu Qualitätseinbußen kommt.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, die Pressmuffel aus Einbettmasse, die zum großen Teil aus keramischem Pulver besteht, das eine geringe Wärmeleitfähigkeit aufweist, mit einem Zusatz zu versehen, der eine höhere Wärmeleitfähigkeit als das keramische Pulver aufweist. Bereits diese grundsätzliche Maßnahme führt dazu, dass eine deutlich verbesserte Wärmeleitfähigkeit innerhalb der Einbettmasse besteht, so dass die Temperaturvergleichmäßigung rascher erfolgt. Dennoch lassen sich überraschend die günstigen Eigenschaften der Einbettmasse aus keramischem Pulver einhalten, insbesondere auch die vergleichsweise geringe Abbindezeit bis zur Aushärtung der Einbettmasse.

Bei gleichmäßiger Verteilung des Zusatzes, der beispielsweise aus SIC-Partikeln bestehen kann, ist die thermische Ankopplung bereits vom Aussenumfang der Muffel betrachtet, wesentlich besser, da der Absorptionkoeffizient des Zusatzes höher als der des Basis-Pulvers ist. Überraschend ist jedoch auch eine wesentlich verbesserte Temperaturvergleichmäßigung möglich, wenn der Zusatz sich wolkenartig um die Formräume erstreckt. Auch bereits im Vorwärmeofen stellt sich die Temperatur vergleichsmässig deutlich schneller ein werden und die Temperaturvergleichmäßigung stellt sich deutlich schneller ein als bei den bislang bekannten Pressmuffeln.

In vorteilhafter Ausgestaltung ist es vorgesehen, den Zusatz auch am Aussenumfang der Pressmuffel vorzusehen und farbig zu halten, also in einer Farbe, die sich von weiss unterscheidet. Hierdurch ist die Absorption gerade bei Verwendung konventioneller Öfen, die Heizstäbe aufweisen, deutlich verbessert, denn die Wärmeabsorption ist wesentlich besser.

Erfindungsgemäß besonders günstig ist es jedenfalls, wenn der Zusatz mit der höheren Wärmeleitfähigkeit die Formräume für die Dentalrestaurationsteile vollständig umgibt. Dies kann beispielsweise dadurch erfolgen, dass der Zusatz in Form eines weiteren Pulvers gleichmäßig in der Einbettmasse verteilt ist. Alternativ kann es auch vorgesehen sein, dass das weitere Pulver oder die sonstigen Partikel sich wie eine Art Käfig, eine Art Hülle oder eine Wolke um die Formräume erstreckt und eine Wärmevergleichmäßigung bereitstellt. Überraschend führt diese Maßnahme dazu, dass trotz der geringen Wärmeleitfähigkeit des keramischen Pulvers der Einbettmasse eine starke Temperaturvergleichmäßigung im zentralen Bereich der Einbettmasse vorliegt, die das gewünschte Temperaturprofil ermöglicht. Bereits die Vorwärmung kann rascher erfolgen und auch das Brennen der dentalen Restaurationsteile kann genau abgestimmt nach dem gewünschten Temperatur-profil erfolgen, auch wenn das keramische Pulver der Einbettmasse eine an sich bekannte recht geringe Wärmeleitfähigkeit aufweist.

Überraschend ist die thermische Ankopplung der Muffel durch den Zusatz wesentlich verbessert. Dies gilt auch dann, wenn ein hoher Anteil von konventioneller Einbettmasse verwendet wird und beispielsweise lediglich den Formraum umgebend oder am Außenumfang der Muffel der Zusatz vorgesehen ist.

In vorteilhafter Ausgestaltung ist es vorgesehen, dass die Wärmeleitfähigkeit des Zusatzes sich gravierend von der Wärmeleitfähigkeit des keramischen Basis-Pulvers unterscheidet. Beispielsweise kann der Unterschied etwa den Faktor 10 aufweisen, so dass das keramische Basis-Pulver als thermischer Isolator und der Zusatz als thermischer Leiter anzusehen ist.

Besonders günstig ist es auch, wenn die Korngröße der Partikel des keramischen Pulvers einerseits und des Zusatzes andererseits an die Erfordernisse angepasst wird. Grundsätzlich bestehen keine Bedenken, die Korngröße des Zusatzes größer als die Korngröße des keramischen Pulvers zu wählen, es sei denn, der Wärmeausdehnungskoeffizient des Zusatzes ist deutlich größer als derjenige des keramischen Pulvers. Wenn dies der Fall ist, kann auch eine gleich große oder kleinere Korngröße für den Zusatz gewählt werden.

Besonders günstig ist es, wenn Maßnahmen getroffen werden, zu verhindern, dass die dentalen Restaurationsteile mit nicht-edelmetallischen Partikeln des Zusatzes in Kontakt kommen. Dies kann beispielsweise dadurch geschehen, dass gleichsam eine Schutzschicht aus keramischem Basispulver für den Bereich vorgesehen ist, der die Formräume unmittelbar umgibt. Die Schutzschicht kann recht dünn gewählt sein und verhindert, dass die sich durch Oxidation verfärbenden nicht-edelmetallischen Partikel des Zusatzes, die bei hohen Temperaturen wie 1500 oder 1600 Grad oxidieren, das dentale Restaurationsteil verfärbt. Alternativ ist es auch möglich, edelmetallische Partikel für den Zusatz zu verwenden, die dann bis an den Formraum heranreichen können.

Das weitere Pulver kann beispielsweise Siliziumcarbid oder Siliziumnitritd oder ein beliebiges anderes geeignetes Material mit hoher Wärmeleitfähigkeit sein. Siliziumcarbid weist beispielsweise eine Wärmeleitfähigkeit von 30 bis 200 W/mK auf und einen Wärmeausdehnungskoeffizienten von 4,3 bis 5,8 10⁻⁶/K, betrachtet bei 1000° C. Besonders günstig bei der Verwendung von Siliciumcarbid als Zusatz ist die Kombination der geringen Wärmedehnung mit der hohen Wärmeleitfähigkeit. Zudem ist der Schmelzpunkt mit 2300° C deutlich höher als die in der Praxis vorkommenden Temperaturbereiche beim Brennen von dentalen Restaurationsteilen.

Bevorzugt wird als Einbettmasse ein Quarzpulver verwendet, das überwiegend cristobalithaltig und eine geringe Wärmeleitfähigkeit von beispielsweise 2 W/mK aufweist. Bereits eine geringe Zumischung von beispielsweise 5 % des SiC-Pulvers führt zur Verbesserung der Gesamt-Wärmeleitfähigkeit der Pressmuffel um 40 %, was eine signifikante Reduktion der Zykluszeit ermöglicht.

Eine besonders günstige Struktur der erfindungsgemäßen Pressmuffel lässt sich auch durch einen Zonenaufbau des Zusatzes erzielen. Beispielsweise kann den oder die Formräume umgebend zunächst ein reines Basis-Pulver vergossen werden und hieran anschliessend - gerade im Fußbereich der Muffel - SiC-haltige Einbettmasse. Durch einen scheibenförmigen Aufbau der SiC-haltigen Zone lässt sich ein guter Wärmeeintrag nach innen realisieren.

Besonders günstig ist es ferner, wenn der Aussenumfang der Pressmuffel unmittelbar durch eine SiC-haltige Zone gebildet ist, oder wenn an dem Aussenumfang der Zusatz schwerpunktmäßig angeordnet ist. Hierdurch wird die Oberflächenrauheit deutlich erhöht und der Wärmeeintrag überraschend gravierend verbessert. Dieser Effekt lässt sich in gleicher Weise durch den Zusatz von kleinen Formstücken oder durch eine Anreicherung mit SiC-Pulver am Aussenumfang der Pressmuffel realisieren.

Erfindungsgemäß besonders günstig in diesem Zusammenhang ist es, dass der Absorptionskoeffizient von Siliziumcarbid vergleichsweise hoch ist, also etwa ε = 0,9 beträgt. Dies führt dazu, dass die eingetragene Wärmemenge besonders gut absorbiert wird.

Es versteht sich, dass die Zonenverteilung und auch der Gesamteintrag des Zusatzes in weiten Bereichen an die Erfordernisse anpassbar ist. Die durch eine Beaufschlagung der Einbettmasse mit dem Zusatz in Höhe von bis zu 5 % wird die Abbindezeit der Einbettmasse nicht oder nicht wesentlich geändert; dies gilt gleichermaßen für die besondere Formtreue der Einbettmasse.

Erfindungsgemäß ist es vorgesehen, dass bis 70%, insbesondere 2 % bis 40 % der gesamten Einbettmasse, aus einem Zusatz besteht, der eine höhere Wärmeleitfähigkeit besitzt als das Basis-Pulver.

In vorteilhafter Ausgestaltung ist es vorgesehen, dass die Wärmeleitfähigkeit des Zusatzes um den Faktor 3 bis 100, insbesondere um das 8- bis 60-fache und besonders bevorzugt um das 10- bis 40-fache höher als die Wärmeleitfähigkeit des Basis-Pulvers ist.

In vorteilhafter Ausgestaltung ist es vorgesehen, dass der Zusatz von einem weiteren Pulver gebildet ist, das insbesonders aus metallischen, insbesondere edelmetallischen Partikeln besteht.

In vorteilhafter Ausgestaltung ist es vorgesehen, dass das weitere Pulver aus Siliziumkarbid und/oder Siliziumnitrid besteht.

In vorteilhafter Ausgestaltung ist es vorgesehen, dass der Zusatz, insbesondere das weitere Pulver um das Dentalrestaurationsteil herum und diesem benachbart verteilt ist.

In vorteilhafter Ausgestaltung ist es vorgesehen, dass im gesamten Umgebungsbereich der Formräume für die dentalen Restaurationsteile die Verteilung des Zusatzes, insbesondere die Konzentration an weiterem Pulver, höher ist als im restlichen Teil der Pressmuffel.

In vorteilhafter Ausgestaltung ist es vorgesehen, dass die Pressmuffel im wesentlichen zylindrisch ausgebildet ist und der die Formräume horizontal umgebende Umgebungsbereich einen vergrößerten Anteil des Zusatzes aufweist und dass der Umgebungsbereich die Temperatur des Formraums vergleichmäßigt.

In vorteilhafter Ausgestaltung ist es vorgesehen, dass die Pressmuffel im wesentlichen zylindrisch ausgebildet ist und der die Formräume vertikal umgebende Umgebungsbereich einen vergrößerten Anteil des Zusatzes aufweist und dass der Umgebungsbereich die Temperatur des Formraums vergleichmäßigt.

In vorteilhafter Ausgestaltung ist es vorgesehen, dass das weitere Pulver und das keramische Pulver homogen gemischt sind.

In vorteilhafter Ausgestaltung ist es vorgesehen, dass der Zusatz eine andere Farbe besitzt als das keramische Pulver.

ln vorteilhafter Ausgestaltung ist es vorgesehen , dass der Zusatz eine andere Farbe als weiss aufweist.

In vorteilhafter Ausgestaltung ist es vorgesehen, dass der Zusatz von kleinen Formstücken, insbesondere in Form von Kugeln und/oder Stiften und/oder Ringen gebildet ist.

In vorteilhafter Ausgestaltung ist es vorgesehen, dass den Formraum für dentale Restaurationsteile unmittelbar umgebend die Pressmuffel ausschließlich aus dem Basis-Pulver ohne Zusatz besteht, insbesondere in einer Schicht, die weniger als ein Zehntel des Durchmessers der Pressmuffel beträgt.

In vorteilhafter Ausgestaltung ist es vorgesehen, dass der Zusatz am Aussenumfang der Pressmuffel in hoher Konzentration eingebracht ist und insbesondere eine größere Partikelgröße als das Basis-Pulver aufweist.

Erfindungsgemäß ist es vorgesehen, dass der Zusatz nach der Art einer Wolke in einer Konzentrationsverteilung in der Einbettmasse vorliegt, die um den Umfang der Pressmuffel betrachtet, im wesentlichen gleich ist und dem Formraum für dentale Restaurationsteile benachbart gering ist, dann rasch zunimmt und anschließend hieran abnimmt, wobei das Konzentrationsmaximum insbesondere innerhalb des halben Radius, vom Formraum ausgehend betrachtet, liegt.

Weitere Vorteile, Einzelheiten und Merkmale ergeben sich aus der nachstehenden Beschreibung zweier Ausführungsbeispiele anhand der Zeichnung.

Es zeigen:
- Fig. 1: eine schematische Ansicht einer Pressmuffel in einer Ausführungsform der Erfindung;
- Fig. 2: die Verteilung des Zusatzes, betrachtet in radialer Richtung über die Press muffel gemäß Fig. 1;
- Fig. 3: ein weiteres Beispiel einer Pressmuffel das nicht zur Erfindung gehört und
- Fig. 4: eine Darstellung des Konzentrationsverlaufs des Zusatzes bei der Ausführungsform gemäß Fig. 3.

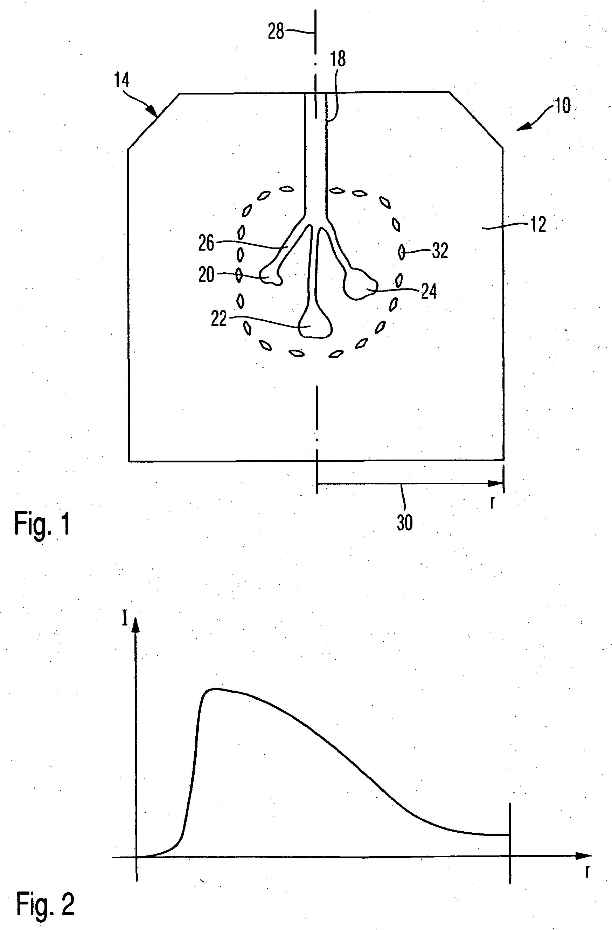

Die in Fig. 1 dargestellte Pressmuffel 10 besteht aus einer Einbettmasse 12, die sich in an sich bekannter Weise nach Aushärten im wesentlichen in Form eines Zylinders erstreckt, mit einer an sich bekannten Abschrägung 14 am oberen äusseren Rand der Pressmuffel 10.

Durch Ausschmelzen entsprechender Wachskörper sind in der Pressmuffel 10 ein Presskanal 18 und Formräume 20, 22 und 24 erzeugt, die über Verbindungskanäle 26 je mit dem Presskanal 18 verbunden sind.

Die Pressmuffel 10 erstreckt sich im wesentlichen kreissymmetrisch um eine Achse 28 und weist einen Radius 30 auf, der dadurch geringer als die Höhe der Pressmuffel ist.

Die in Fig. 1 dargestellte Ausführungsform einer erfindungsgemäßen Pressmuffel 10 weist erfindungsgemäß den Zusatz 32 in Form von Partikeln auf, die um die Formräume 20 bis 24 gleichmäßig verteilt sind. Die Verteilung ist hier schematisch über die Partikel 32 dargestellt, wobei es sich versteht, dass tatsächlich dort lediglich eine entsprechende Zone von Partikeln besteht, die eine erhöhte Wärmeleitfähigkeit für die Pressmuffel an dieser Stelle bedingt. Diese Ausführungsform ist besonders geeignet, um die Temperatur zwischen den Formräumen 20, 22 und 24 zu vergleichmäßgen. Auch zum Außenradius hin sind jedoch Partikel 32 vorgesehen, bei dieser Ausführungsform allerdings in geringem Maße, so dass auch die erhöhte Wärmeleitfähigkeit auch die verbesserten Wärmeabsorptionseigenschaften der Partikel 32 des Zusatzes günstig zum Tragen kommen.

Bei dieser Ausführungsform ist der Bereich, der die Formräume 20 bis 24 unmittelbar umgibt, frei von Zusatzpartikeln 32. Hierdurch ist es möglich, nicht nur Siliciumcarbitpartikel zu verwenden, die gegenüber Dentalrestaurationskeramiken inhert sind, sondern auch metallische Partikel. Pressöfen werden heutzutage auch bei geringeren Temperaturen verwendet, wie beispielsweise bei etwas über 1000 °C oder sogar bei 900 °C. Dies eröffnet die Möglichkeit, auch metallische Verbindungen einzusetzen und die Zusatzpartikel bis an die Formräume heranzuführen.

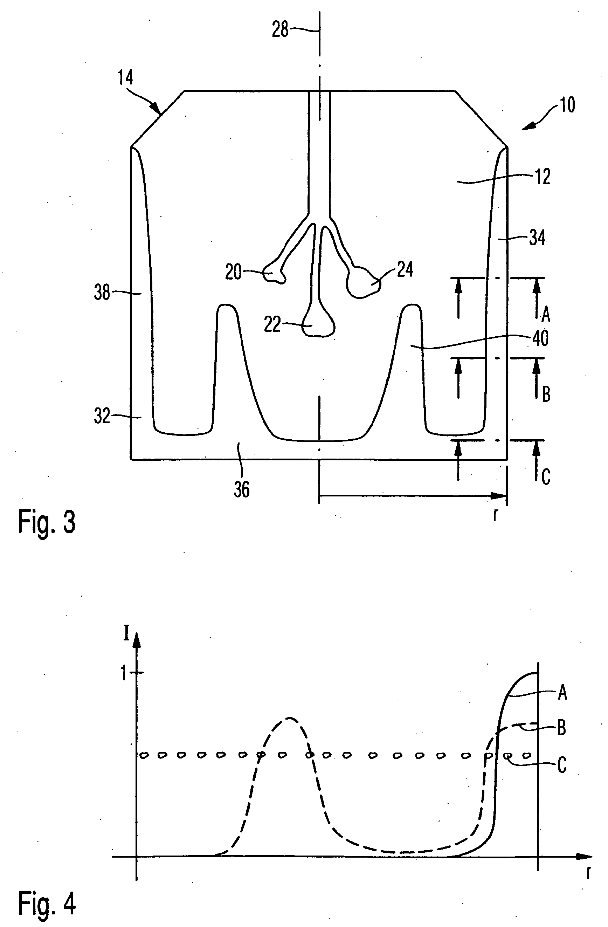

Eine modifizierte Ausgestaltung der erfindungsgemäßen Pressmuffel ist aus Fig. 3 ersichtlich. Gleiche Bezugszeichen weisen hier auf gleiche Teile hin. Bei dieser Ausführungsform ist eine speziell ausgebildete Zone 34 mit Partikeln 32 vorgesehen. Die Zone 34 erstreckt sich über den Boden 36 der Pressmuffel 10 weg und bildet dort eine Art Scheibe. Zusätzlich erstreckt sie sich über die gesamte Außenwand 38 der zylinderförmigen Pressmuffel 10 und bildet dort eine Art Hohlzylinder. Durch die Kombination ergibt sich ein im wesentlichen topfförmiger Aufbau der Zone 34 mit den Partikeln 32.

Darüber hinaus ist bei dem Beispiel gemäß Fig. 3 auch eine Art Innentopf 40 vorgesehen, der im Grunde schematisch in Fig. 3 dargestellt ist und Bereiche erhöhter Partikelkonzentration der Partikel 32 darstellt, die bis in den Umfangsbereich der Formhohlräume 20, 22 und 24 reicht. Hierdurch ist eine besonders gute thermische Ankopplung dort gewährleistet, wobei bevorzugt der Abstand der Zone des Innentopfes 40 zu den Formräumen 20, 22 und 24 gleich gewählt ist, so dass der Wärmeeintrag besonders gut vergleichmäßigt erfolgt.

Der Konzentrationsverlauf der Partikel 32 in den verschiedenen Höhen A, B, C, über den Radius R betrachtet, ist in Fig. 4 dargestellt. Es ist ersichtlich, dass am Außenumfang die Konzentration der Partikel 32 insgesamt besonders hoch ist, zur Beibehaltung der Formtreue jedoch im Bodenbereich bei C etwas geringer als auf der Höhe der Formräume bei A.

Wie ersichtlich ist, ist die Formräume umgebend, entsprechend der Kurve A, die Einbettmasse ausschließlich aus keramischen Basispulver bereitgestellt, also frei von Zusatzpartikeln 32. Unterhalb der Formräume, entsprechend der Kurve B, ist jedoch den Formräumen 20 bis 24 benachbart ein Bereich höherer Konzentrationen der Partikel 32 vorgesehen, wie es entsprechend der gestrichelten Kurve B dargestellt ist.

Im Bodenbereich, also im Bereich der Scheibe 36 ist die Konzentration der Partikel über den gesamten radialen Verlauf der Pressmuffel 10 gleichbleibend.

Es versteht sich, dass die dargestellten Ausführungsformen der Erfindung lediglich beispielhaft zu sehen sind und in weiten Bereichen eine Anpassung an die je vorliegenden Erfordernisse und Einbettmassen erfolgen kann.

## Patentansprüche

1. Pressmuffel aus Einbettmasse für die Herstellung von dentalen Restaurationsteilen, wobei die Einbettmasse wenigstens ein niedrig wärmeleitendes, insbesondere keramisches, Basis-Pulver aufweist wobei bis 70%, insbesondere 2 % bis 40 % der gesamten Einbettmasse (12), aus einem Zusatz besteht, der eine höhere Wärmeleitfähigkeit besitzt als das Basis-Pulver, **dadurch gekennzeichnet, dass** der Zusatz nach der Art einer Wolke in einer Konzentrationsverteilung in der Einbettmasse (12) vorliegt, die, um den Umfang der Pressmuffel (10) betrachtet im wesentlichen gleich ist und dem Formraum für dentale Restaurationsteile benachbart gering ist, dann rasch zunimmt und anschließend hieran abnimmt, wobei die Pressmuffel (10) sich vorziehungsweise in wesentlich zylindrisch mit einem Radius (30) ausgebildet ist und wobei das Konzentrationsmaximum insbesondere innerhalb des halben Radius (30), vom Formraum ausgehend betrachtet, liegt.

2. Pressmuffel nach Anspruch 1, **dadurch gekennzeichnet, dass** die Wärmeleitfähigkeit des Zusatzes um den Faktor 3 bis 120, insbesondere um das 8- bis 80-fache und besonders bevorzugt um das 10- bis 40-fache höher als die Wärmeleitfähigkeit des BasisPulvers ist.

3. Pressmuffel nach einem der Ansprüche 1 bis 2, **dadurch gekennzeichnet, dass** der Zusatz von einem weiteren Pulver gebildet ist, das insbesonders aus metallischen, insbesondere edelmetallischen Partikeln (32) besteht.

4. Pressmuffel nach einem der vorhergehenden Ansprüche 3 oder 4, dadurch gekennzeüchnet, dass das weitere Pulver aus Siliziumkarbid und/oder Siliziumnitrid besteht

5. Pressmuffel nach einem der vorhergehenden Ansprüche, **dadurch gekennzeichnet, dass** der Zusatz, insbesondere das weitere Pulver um das Dentalrestaurationsteil herum und diesem benachbart verteilt ist.

6. Pressmuffel nach einem der vorhergehenden Ansprüche, **dadurch gekennzeichnet, dass** im gesamten Umgebungsbereich der Formräume (20,22,24) für die dentalen Restaurationsteile die Verteilung des Zusatzes, insbesondere die Konzentration an weiterem Pulver, höher ist als im restlichen Teil der Pressmuffel (10).

7. Pressmuffel nach einem der vorhergehenden Ansprüche, **dadurch gekennzeichnet, dass** die Pressmuffel (10) im wesentlichen zylindrisch ausgebildet ist und der die Formräume (20,22,24) horizontal umgebende Umgebungsbereich einen vergrößerten Anteil des Zusatzes aufweist und dass der Umgebungsbereich die Temperatur des Formraums vergleichmäßigt.

8. Pressmuffel nach einem der vorhergehenden Absprüche, **dadurch gekennzeichnet, dass** die Pressmuffel (10) im wesentlichen zylindrisch ausgebildet ist und der die Formräume (20,22,24) vertikal umgebende Umgebungsbereich einen vergrößerten Anteil des Zusatzes aufweist und dass der Umgebungsbereich die Temperatur des Formraums vergleichmäßigt.

9. Pressmuffel nach einem der Ansprüche 1 bis 4, **dadurch gekennzeichnet, dass** das weitere Pulver und das keramische Pulver homogen gemischt sind.

10. Pressmuffel nach einem der vorhergehenden Ansprüche, **dadurch gekennzeichnet, dass** der Zusatz eine andere Farbe besitzt als das keramische Pulver.

11. Pressmuffel nach einem der vorhergehenden Ansprüche, **dadurch gekennzeichnet, dass** der Zusatz eine andere Farbe als weiss aufweist.

12. Pressmuffel nach einem der vorhergehenden Ansprüche, **dadurch gekennzeichnet, dass** der Zusatz von kleinen Formstücken, insbesondere in Form von Kugeln und/oder Stiften und/oder Ringen gebildet ist.

13. Pressmuffel nach einem der vorhergehenden Ansprüche, **dadurch gekennzeichnet, dass** den Formraum für dentale Restaurationsteile unmittelbar umgebend die Pressmuffel (10) ausschlie ßlich aus dem Basis-Pulver ohne Zusatz besteht, insbesondere in einer Schicht, die weniger als ein Zehntel des Durchmessers der Pressmuffel (10) beträgt.

14. Pressmuffel nach einem der vorhergehenden Ansprüche, **dadurch gekennzeichnet, dass** der Zusatz am Aussenumfang der Pressmuffel (10) in hoher Konzentration eingebracht ist und insbesondere eine größere Partikelgröße als das Basis-Pulver aufweist.

## Claims

1. Press muffle made of an embedding mass for the production of dental restoration parts, with the embedding mass comprising at least one weakly heat-conducting, in particular ceramic, basic powder, wherein up to 70%, in particular 2% to 40% of the entire embedding mass (12) consists of an additive having a higher thermal conductivity than the basic powder, **characterized In that** the additive is provided according to the type of a cloud in a concentration distribution within the embedding mass (12) which, as viewed around the circumference of the press muffle (10), is substantially equal and is low adjacent to the shaping space for dental restoration parts, then is increased quickly and is decreased subsequently, wherein the press muffle (10) is preferably configured substantially cylindrically having a radius (30), with the maximum concentration being in particular within half the radius (30), as viewed from the shaping space.

2. Press muffle in accordance with Claim 1, **characterized in that** the thermal conductivity of the additive is higher than the thermal conductivity of the basic powder by the factor of 3 to 120, in particular 8 to 80 times higher, and especially preferably 10 to 40 times higher.

3. Press muffle in accordance with one of the Claims 1 to 2, **characterized in that** the additive is made up of a further powder which particularly consists of particles (32) of a metal, in particular of a noble metal.

4. Press muffle in accordance with one of the previous Claims 3 or 4, **characterized in that** the further powder consists of silicon carbide and/or silicon nitride.

5. Press muffle in accordance with one of the previous Claims, **characterized in that** the additive, in particular the further powder, Is distributed around the dental restoration part and adjacent to it.

6. Press muffle in accordance with one of the previous Claims, **characterized in that** in the entire area surrounding the shaping spaces (20, 22, 24) for the dental restoration parts, the distribution of the additive, in particular the concentration of further powder, is higher than in the remaining portion of the press muffle (10).

7. Press muffle in accordance with one of the previous Claims, **characterized in that** the press muffle (10) is basically of cylindrical shape and the surrounding area horizontally surrounding the shaping spaces (20,22,24) has an increased share in the additive, and **in that** the surrounding area equalizes the temperature of the shaping space.

8. Press muffle in accordance with one of the previous Claims, **characterized in that** the press muffle (10) is basically of cylindrical shape and the surrounding area vertically surrounding the shaping spaces (20,22,24) has an increased share in the additive, and **in that** the surrounding area equalizes the temperature of the shaping space.

9. Press muffle in accordance with one of Claims 1 to 4, **characterized in that** the further powder and the ceramic powder are mixed to be homogeneous.

10. Press muffle in accordance with one of the previous Claims, **characterized in that** the additive is of a different color than the ceramic powder.

11. Press muffle in accordance with one of the previous Claims, **characterized in that** the additive is of a color other than white.

12. Press muffle in accordance with one of the previous Claims, **characterized in that** the additive Is made up of small shaped particles, in particular in the shape of spheres and/or pins and/or rings.

13. Press muffle in accordance with one of the previous Claims, **characterized in that** the shaping space for dental restoration parts immediately surrounding the press muffle (10) consists exclusively of the basic powder without any additive, in particular of a layer which amounts to less than one tenth of the diameter of the press muffle (10).

14. Press muffle in accordance with one of the previous Claims, **characterized in that** the additive is introduced at the outer circumference of the press muffle (10) in a high concentration, and in particular has larger particle size than the basic powder.

## Revendications

1. Cylindre de pressée en masse d'enrobage pour la fabrication de pièces de restauration dentaire, où la masse d'enrobage présente au moins une poudre de base faiblement thermoconductrice, en particulier céramique, où jusqu'à 70%, en particulier de 2% à 40 % de la masse totale d'enrobage (12), est composée d'un additif, dont la thermoconductivité est supérieure à celle de la poudre de base, **caractérisé en ce que** l'additif est présent dans Ja masse d'enrobage (12) dans une distribution de concentrations à la manière d'un nuage, qui est essentiellement régulière autour de la périphérie du cylindre de pressée (10), et contigu à l'espace de moulage pour des pièces de restauration dentaire est faible puis augmente rapidement, où le cylindre de pressée (10) est formé de préférence essentiellement cylindrique avec un rayon (30) et ensuite décroît contre celui-ci, où la concentration maximale se trouve en particulier à l'intérieur du demi-rayon (30), vu depuis l'espace de moulage.

2. Cylindre de pressée selon la revendication 1, **caractérisé en ce que** la thermoconductivité de l'additif est plus élevée que la thermoconductivité de la poudre de base par un facteur compris entre 3 à 120 fois, en particulier de 8 à 80 fois et de façon particulièrement préférée de 10 à 40 fois.

3. Cylindre de pressée selon une des revendications 1 ou 2, **caractérisé en ce que** l'additif est formé d'une poudre supplémentaire, qui est composée en particulier de particules métalliques, surtout en métal noble (32).

4. Cylindre de pressée selon une quelconque des revendications précédentes 3 ou 4, **caractérisé en ce que** la poudre supplémentaire est composée de carbure de silicium ou de nitrure de silicium.

5. Cylindre de pressée selon une quelconque des revendications précédentes, **caractérisé en ce que** l'additif, en particulier la poudre supplémentaire, est distribuée autour de la pièce de restauration dentaire et à proximité de celle-ci.

6. Cylindre de pressée selon une quelconque des revendications précédentes, **caractérisé en ce que**, dans toute la région des espaces de moulage (20, 22, 24) pour les pièces de restauration dentaire, la répartition de l'additif, en particulier la concentration de la poudre supplémentaire, est plus élevée que dans le reste du cylindre de pressage (10).

7. Cylindre de pressée selon une quelconque des revendications précédentes, **caractérisé en ce que** le cylindre de pression (10) est formé essentiellement cylindrique et que la zone environnante qui entoure horizontalement les espaces de moulage (20, 22, 24) présente une plus grande proportion de l'additif et que la zone environnante égalise la température de l'espace de moulage.

8. Cylindre de pressée selon une quelconque des revendications précédentes, **caractérisé en ce que** le cylindre de pressage (10) est formé essentiellement cylindrique et que la zone environnante qui entoure verticalement les espaces de moulage (24, 22, 24) présente une plus grande proportion de l'additif et que la zone environnante égalise la température de l'espace de moulage.

9. Cylindre de pressée selon l'une des revendications 1 à 4, **caractérisé en ce que** la poudre supplémentaire et la poudre céramique sont mélangées de façon homogène.

10. Cylindre de pressée selon une quelconque des revendications précédentes, **caractérisé en ce que** l'additif est d'une couleur différente de celle de la poudre céramique.

11. Cylindre de pressée selon une quelconque des revendications précédentes, **caractérisé en ce que** l'additif est d'une couleur autre que le blanc.

12. Cylindre de pressée selon une quelconque des revendications précédentes, **caractérisé en ce que** l'additif est formé par des pièces formées, en particulier sous forme de boules et/ou de broches et/ou d'anneaux.

13. Cylindre de pressée selon une quelconque des revendications précédentes, **caractérisé en ce que** l'espace de moulage pour pièces de restauration dentaire entourant directement le cylindre de pressage (10), est composé exclusivement de la poudre de base sans additifs, en particulier d'une couche qui occupe moins d'un dixième du diamètre du cylindre de pressage (10).

14. Cylindre de pressée selon une quelconque des revendications précédentes, **caractérisé en ce que** l'additif est présent en haute concentration à la périphérie extérieure du cylindre de pressage (10) et présente en particulier une particule de plus grande taille que la poudre de base.
